**Europäisches Patentamt**

**European Patent Office**

**Office européen des brevets**

(19)

(11) Veröffentlichungsnummer: **0 115 857**
A1

# (12) EUROPÄISCHE PATENTANMELDUNG

(21) Anmeldenummer: **84101032.5**

(22) Anmeldetag: **02.02.84**

(51) Int. Cl.³: **B 60 L 9/30,** B 60 L 1/10,
H 02 P 7/00

(30) Priorität: **09.02.83 DE 3304377**

(43) Veröffentlichungstag der Anmeldung: **15.08.84**
**Patentblatt 84/33**

(84) Benannte Vertragsstaaten: **AT BE CH FR IT LI LU NL**

(71) Anmelder: **Fried. Krupp Gesellschaft mit beschränkter Haftung, Altendorfer Strasse 103, D-4300 Essen 1 (DE)**

(72) Erfinder: **Seeger, Herbert, Bergische Strasse 32, D-4320 Hattingen 16 (DE)**

(54) Einrichtung zur Energieversorgung von Nutzverbrauchern in einem Schienenfahrzeug.

(57) Um einen geringen Phasenanschnitt bei geringer Leistung von Drehstrommotoren bzw. dem Batterieladegerät in einem Reisezug zu vermeiden, schaltet man bei einer Energieversorgungseinrichtung, die Gleich- und Wechselspannungen unterschiedlicher Höhe und Frequenz verarbeiten soll, die Nutzverbraucher unmittelbar an den Teil eines Wechselrichters darstellenden Spannungskonstanthalter und verbindet diesen mit dem Drehstrommotor und dem Batterieladegerät über eine gesteuerte Gleichrichterbrücke, vorzugsweise über eine thyristor-gesteuerte Brücke in Graetz–Schaltung.

EP 0 115 857 A1

FRIED. KRUPP GESELLSCHAFT MIT BESCHRÄNKTER   HAFTUNG
in Essen


Einrichtung zur Energieversorgung von Nutzverbrauchern
in einem Schienenfahrzeug


Die vorliegende Erfindung betrifft eine Energieversorgungseinrichtung, die je nach angebotener Stromart im Reisezugverkehr aus der Hauptheizleitung mit
Gleichspannungen unterschiedlicher Höhe sowie Wechselspannungen unterschiedlicher Spannung und Frequenz
versorgt wird. In der Praxis treten Gleichspannungen
von 1500 V und 3000 V sowie Wechselspannungen von
1000 V mit 16 2/3 Hz und 1500 V mit 50 Hz auf. Die
Energieversorgungseinrichtung weist einen Umformer
mit einem statischen Wechselrichter für Nutzverbraucher auf, insbesondere für einen in einem Schienenfahrzeug sich befindenden Drehstrommotor und ein Batterieladegerät. Um auch bei Schwankungen der Netzspannung eine nahezu konstante Ausgangsspannung liefern zu können, wird als Wechselrichtertransformator
ein magnetischer Spannungskonstanthalter verwendet.


Nach dem Stand der Technik sind Energieversorgungseinrichtungen mit Umformern bekannt, die einen eine
rechteckförmige Spannung liefernden Wechselrichter
aufweisen, z.B. mittels einer sogenannten Chopper-
Regelung. Zur Erzeugung der für die Nutzverbraucher
benötigten sinusförmigen Wechselspannungen dienen ein
Gleichstromsteller bzw. ein geregeltes Gleichrichtergerät, entsprechende Filter sowie ein aus Spule und
Kondensator bestehender Gleichstromzwischenkreis.

Aus der "ETR-Eisenbahntechnischen Rundschau" 19, (1970), Seiten 226 bis 229 ist auchschon ein Thyristorwechselrichter mit geregelter Ausgangsspannung für Fluoreszenzbeleuchtung in Schienenfahrzeugen bekannt, der anstelle des Wechselrichtertransformators einen magnetischen Spannungskonstanthalter enthält. Ferner ist aus der EP-A1 24 448 eine Energieversorgungsanlage mit einem Wechselrichter und einem Spannungskonstanthalter bekannt, bei denen am Ausgang des Spannungskonstanthalters Leuchten, Motoren sowie ein Batterieladegerät angeschlossen sind. Allerdings besitzt diese Schaltung den Nachteil einer hohen Scheinleistung, wenn die Motoren nur bei geringer Drehzahl laufen.

Es ist Aufgabe der vorliegenden Erfindung, eine mit einer Wechselrichteranlage ausgestattete, für verschiedene Eingangsspannungen geeignete Energieversorgungsanlage ohne Schaltkontakte für das Batterieladegerät und den Drehstrommotor (bzw. den Drehstromerzeuger) mit möglichst wenigen und störunanfälligen Bauteilen anzugeben. Insbesondere ist es jedoch Aufgabe der Erfindung eine Energieversorgungsanlage zu schaffen, die eine hohe Scheinleistung bei geringer Leistung des Drehstrommotors verhindert.

Die Aufgabe wird durch eine Energieversorgungseinrichtung obengenannter Art gelöst, bei der an der Sekundärseite des magnetischen Spannungskonstanthalters alle Nutzverbraucher angeschlossen sind, wobei die eine konstante (220 V-) Spannung zum Betrieb benötigenden Nutzverbraucher unmittelbar an den Spannungskonstanthalter angeschlossen sind und dem Batterieladegerät und dem Drehstromwechselrichter für den Drehstrommotor jeweils eine ebenfalls an den Spannungskonstanthalter angeschlossene, gesteuerte Gleichrichterbrücke vorgeschaltet ist.

In der erfindungsgemäßen Einrichtung nutzt man einerseits die Vorteile des magnetischen Spannungskonstanthalters aus, die insbesondere darin bestehen, daß die
Ausgangsspannung nahezu konstant verläuft, das heißt
Netzspannungsschwankungen werden kompensiert, Störspannungsspitzen werden unterdrückt und kurzzeitige
Netzeinbrüche ausgeglichen. Ferner werden die Kurzschlußströme begrenzt. Andererseits haben die Verbraucher wie Motoren und Batterieladegerät je nach Leistungsabgabe eine entsprechend zurückgestufte Eingangsspannung zur Verfügung. Durch die "elektronische cos
$\varphi$ -Umschaltung" wird also ein geringer Phasenanschnitt
vermieden.

Nach einer Weiterbildung der Erfindung wird die gesteuerte Gleichrichterbrücke in Graetz-Schaltung ausgeführt, vorteilhafterweise mit einer Thyristorsteuerung, bei der je ein parallel geschaltetes Paar von
Thyristoren über je ein Ansteuergerät von dem Impulsgeber des Drehstromwechselrichters angesteuert wird.
Vorteilhafterweise wird ein Thyristor-Wechselstrom-
Wechselrichter verwendet, der mit einer Taktfrequenz
von 200 bis 400 Hz angesteuert wird.

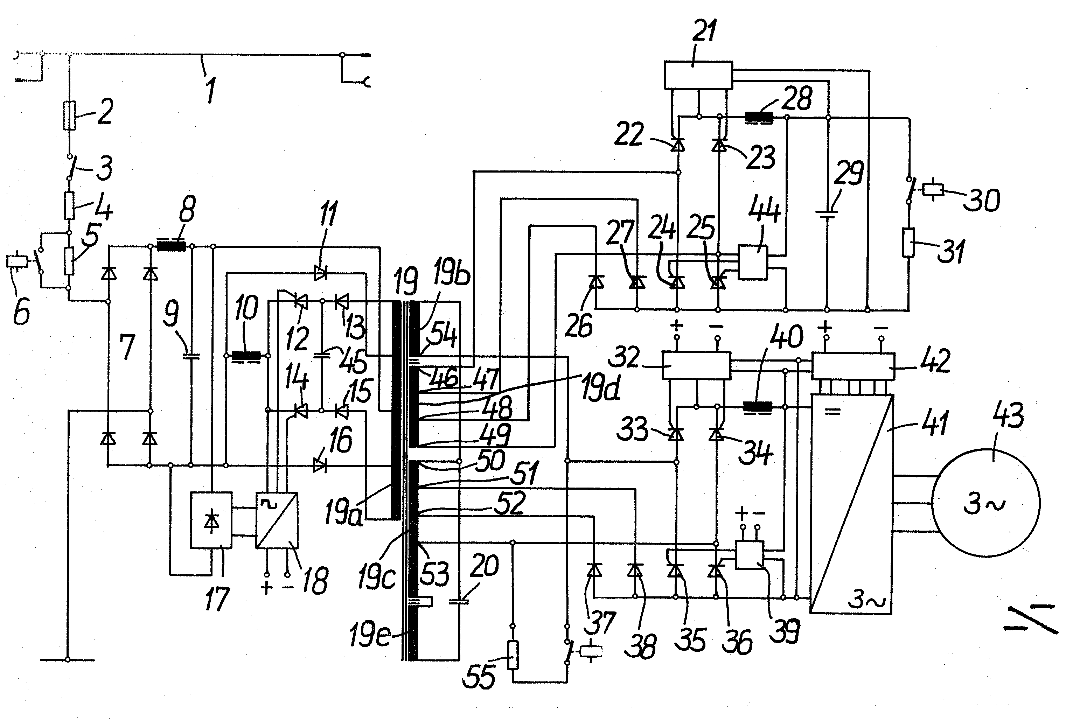

Ein Ausführungsbeispiel der Erfindung ist in der Zeichnung dargestellt, die eine schematische Skizze der erfindungsgemäßen Energieversorgungseinrichtung zeigt.

Die in der Zeichnung dargestellte Energieversorgungseinrichtung wird aus einer durch den Reisezug hindurchgehenden Sammelleitung 1 gespeist, die an die jeweilige
Fahrleitung über den Stromabnehmer der Lokomotive angeschlossen ist. Die Energieeinspeisung erfolgt über eine Sicherung 2, einen Schalter 3 (Schützkontakt), Widerstände 4 und 5, wobei dem Anlaßwiderstand 5 ein Eingangsüberbrückungskontakt 6 parallel geschaltet ist. Den genannten Schalterelementen ist eine Gleichrichterbrücke 7 nachgeschaltet, die über eine Drossel 8 an einen Wechselrichter 10 bis 16, 18, 19 angeschlossen ist. Der Wechselrichter besitzt einen Taktgeber 18, durch den die Thyristoren 12 und 14 mit einer Taktfrequenz von 400 Hz angesteuert werden. Die Wicklungsenden der Primärwicklung 19a des Wechselrichtertransformators 19 sind an Sperrdioden 13 und 15 angeschlossen. Der Wechselrichter enthält ferner eine Kommutierungsdrossel 10, einen Kommutierungskondensator 45 sowie Freilaufdioden 11 und 16. Die Anoden der Thyristoren 12 und 14 sowie die Kathoden der Dioden 13 und 15 sind über den Kommutierungskondensator 45 miteinander verbunden. Des weiteren ist die Mittenanzapfung der Primärwicklung 19a nicht nur an die Drossel 8, sondern ebenfalls an die Entkopplungsdiode 17 angeschlossen, die parallel zur Gleichrichterbrücke 7 und Drossel 8 liegt.

Als Wechselrichtertransformator dient ein Spannungskonstanthalter, der sekundärseitig eine Kompensationswicklung 19b, eine Resonanz- und Ausgangswicklung 19c, 19d sowie eine Oberwellenkompensationswicklung 19e sowie jeweils dazwischen liegende Streuluftspalte besitzt. Den Wicklungen 19c und 19e ist noch ein Resonanzkondensator 20 parallel geschaltet.

Die Sekundärseite des Wechselrichtertransformators 19 versorgt die 220 V-Nutzverbraucher 55 über Abgriffe 54 und 53. Gleichermaßen werden über Abgriffe 46 bis 49 und 50 bis 53 ein Batterieladegerät 31 sowie der Drehstromwechselrichter 41 mit nachgeschaltetem Drehstrommotor 43 mit Energie versorgt. Zwischen die
entsprechende Wicklungsanzapfung des Transformators
und das Ladegerät bzw. den Drehstromwechselrichter
sind thyristorgesteuerte Gleichrichterbrücken 33 bis
38 und 22 bis 27 geschaltet. Hierbei werden die Thyristoren 33 bis 36 von mit dem Impulsgeber 42 verbundenen Ansteuergeräten 39 und 32 angesteuert. Entsprechendes gilt für die Thyristoren 22 bis 25, die
von Ansteuergeräten 21 und 44 angesteuert werden. Die
Gleichrichterbrücken 22 bis 25 und 33 bis 36 sind jeweils in Graetz-Schaltung angeordnet und über eine
Kommutierungsdrossel 28 bzw. 40 an das Ladegerät bzw.
den Drehstromwechselrichter 41 angeschlossen. Der
Pluspol der Batterie 29 wird durch eine Schaltungseinrichtung 30, die aus einem Schalter und einem Schütz
besteht, von Hand mit dem Ladegerät 31 verbunden.

Die erfindungsgemäße Energieversorgungseinrichtung
kann z.B. die im Reisezugverkehr üblichen Spannungen
von 1500 V = und 3000 V = sowie 1000 V 16 2/3 Hz und
1500 V 50 Hz verarbeiten. Dabei enthält der Wechselrichter über die Sicherung 2, den Schützkontakt 3, den
Anlaßwiderstand 5 und den Gleichrichter 7 und die
Drossel 8 Spannung. Auf der Sekundärseite des Transformators 19 liefert die Wicklung 19c 220 V an die Verbraucher 55 und über die gesteuerte Gleichrichterbrücke
33 bis 36 Energie an den Drehstromwechselrichter 41.
Über die Wicklung 19d wird gleichermaßen ein Batterieladegerät 31 über die Gleichrichterbrücke 22 bis 25 gespeist.

Bei den verschiedenen Eingangsspannungen von der Zugsammelschiene 1 muß der Spannungskonstanthalter die
Ausgangsspannung in den Toleranzen $\pm$ 25 % konstant

halten. Der gesamte Regelbereich des Spannungskonstanthalters liegt demnach bei einer Eingangsspannung von 750 V bis 3750 V. Der in vorliegender Schaltung verwendete Spannungskonstanthalter hat auf einem Kern eine Primärwicklung 19a, eine magnetisch mit dieser Wicklung stark gekoppelte Kompensationswicklung 19b, eine mit der Primärwicklung schwach gekoppelte Sekundärwicklung 19c, 19d und eine mit der Sekundärwicklung 19c, 19d schwach gekoppelte Neutralisationswicklung oder Oberwellenkompensation 19e sowie einen Resonanzkondensator 20. Der Drehstromwechselrichter 41 ist spannungs- und frequenzveränderlich, das heißt über die Thyristoren 33 und 34 wird eine Zwischenkreisspannung vorgegeben.

Läuft nun der Drehstrommotor 43 mit geringer Drehzahl z.B. wenn er als Kompressormotor einer Klimaanlage betrieben wird, ist die Spannung hinter der Gleichrichterbrücke 33 bis 36 gering. Um einen größeren Durchflußwinkel zu erreichen, werden die Thyristoren 35 und 36 nicht mehr gezündet, so daß eine geringere Spannung über den Dioden 37 und 38 anliegt. Die Gleichrichterbrücke 33 bis 38 regelt daher die Eingangsspannung für den dem Drehstrommotor 43 vorgeschalteten Wechselrichter 41, wodurch die Scheinleistung des Transformators und damit des Wechselrichters herabgesetzt wird. Nach dem gleichen Prinzip werden die Thyristoren 24 und 25 nicht gezündet, wenn die Bordbatterie nicht bzw. nur geringfügig geladen wird.

Ansprüche

1. Energieversorgungseinrichtung mit einem aus einem elektrischen Netz mit Gleichspannungen unterschiedlicher Höhe und Wechselspannungen unterschiedlicher Höhe und Frequenz speisbaren und einen statischen Wechselrichter aufweisenden Umformer für Nutzverbraucher, insbesondere für einen in einem Schienenfahrzeug sich befindenden Drehstrommotor und ein Batterieladegerät, wobei der Umformer bei Schwankungen der Netzspannung eine nahezu konstante Ausgangsspannung liefert und einen als Wechselrichtertransformator dienenden magnetischen Spannungskonstanthalter aufweist, d a d u r c h   g e - k e n n z e i c h n e t , daß die eine konstante Spannung zum Betrieb benötigenden Nutzverbraucher (55) unmittelbar an dem Spannungskonstanthalter (19b bis 19d) angeschlossen sind und dem Drehstrommotor (43), bzw. dem Drehstromwechselrichter (41), und dem Batterieladegerät (31) jeweils eine ebenfalls an den Spannungskonstanthalter (19b bis 19d) angeschlossene, gesteuerte Gleichrichterbrücke (33 bis 38 und 22 bis 27) vorgeschaltet ist.

2. Energieversorgungseinrichtung nach Anspruch 1, gekennzeichnet durch eine gesteuerte Gleichrichterbrücke in Graetz-Schaltung.

3. Energieversorgungseinrichtung nach Ansprüche 1 und 2, gekennzeichnet durch eine thyristorgesteuerte Graetz-Schaltung, bei der je ein parallel geschaltetes Paar von Thyristoren über je ein Ansteuergerät (32, 39) von dem Impulsgeber (42) des Drehstromwechselrichters (41) versorgt wird.

0115857

4. Energieversorgungseinrichtung nach Anspruch 1, gekennzeichnet durch Thyristor-Wechselstrom-Wechselrichter, die mit einer Taktfrequenz von 200 bis
   400 Hz betrieben werden.

0115857

Europäisches
Patentamt

**EUROPÄISCHER RECHERCHENBERICHT**

0115857
Nummer der Anmeldung

EP 84 10 1032

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | EP-A-0 015 462 (F. KRUPP) * Seite 5, Zeile 1 - Seite 7, Zeile 12; Seite 12, Zeile 20 - Seite 14, Zeile 23; Abbildungen 1,6 * | 1-3 | B 60 L 9/30 B 60 L 1/10 H 02 P 7/00 |
| | --- | | |
| A,D | EP-A-0 024 448 (F. KRUPP) * Seite 4, Zeile 1 - Seite 5, Zeile 28; Abbildung 1 * | 1,2 | |
| | --- | | |
| A | FR-A-2 168 421 (F. KRUPP) * Seite 1, Zeile 35 - Seite 2, Zeile 22; Abbildung * | 1 | |
| | ----- | | |

|  | RECHERCHIERTE SACHGEBIETE (Int. Cl. ³) |
|---|---|
| | H 02 P 7/00 B 60 L 9/00 B 60 L 1/00 |

Der vorliegende Recherchenbericht wurde für alle Patentansprüche erstellt.

| Recherchenort DEN HAAG | Abschlußdatum der Recherche 08-05-1984 | Prüfer WEIHS J.A. |
|---|---|---|